# EUROPÄISCHE PATENTSCHRIFT

(11) **EP 3 880 977 B1**
(45) Veröffentlichungstag und Bekanntmachung des Hinweises auf die Patenterteilung: **05.07.2023**
(21) Anmeldenummer: 19801269.2
(22) Anmeldetag: 06.11.2019
(51) Int. Cl.: F16B 19/06, F16B 19/08

(54) **VOLLSTANZNIET**
SOLID PUNCH RIVET
RIVET AUTO-PERFORANT

(30) Priorität: 13.11.2018 DE 102018128455
(43) Veröffentlichungstag der Anmeldung: 22.09.2021
(73) Patentinhaber: Böllhoff Verbindungstechnik GmbH, 33649 Bielefeld (DE)
(72) Erfinder: FLÜGGE, Tim, 32105 Bad Salzuflen (DE); HENKE, Dennis, 33442 Herzebrock-Clarholz (DE); JUNKLEWITZ, Daniel, 33106 Paderborn (DE); MENNE, Franz Ferdinand, 33175 Bad Lippspringe (DE)
(74) Vertreter: HWP Intellectual Property
(86) Internationale Anmeldenummer: PCT/EP2019/080354
(87) Internationale Veröffentlichungsnummer: WO 2020/099203

(56) Entgegenhaltungen:
- EP-A1- 3 031 564
- WO-A1-03/080270
- DE-U1-202016 105 089

## Beschreibung

### 1. Gebiet der Erfindung

Die vorliegende Erfindung betrifft einen Vollstanzniet, mit dem mindestens zwei Bauteile durch einen Setzvorgang in die mindestens zwei Bauteile miteinander verbindbar sind. Des Weiteren betrifft vorliegende Erfindung eine Stanznietverbindung zwischen mindestens einem ersten und einem zweiten Bauteil mit dem oben genannten Vollstanzniet sowie ein Verbindungsverfahren mithilfe des Vollstanzniets, bei dem dieser in eine stapelförmige Anordnung von mindestens zwei Bauteilen gesetzt wird.

### 2. Hintergrund der Erfindung

Ein Vollstanzniet weit verbreiteter Geometrie ist in WO 2012/113 463 beschrieben. Er zeichnet sich durch einen vollzylindrischen Schaft und einen endseitig angeordneten Kopf aus. Das dem Kopf gegenüberliegende axiale Ende besitzt zumeist eine Schneidgeometrie. Diese erleichtert das Setzen in mehrere Bauteile. Aufgrund der Geometrie des Vollstanzniets muss dieser orientiert der Fügestelle zugeführt werden. Dies erfordert eine entsprechende technische Ausstattung der Elementzufuhr zum Setzgerät.

DE 20 2016 105 089 U1 beschreibt ein H-förmiges Verbindungselement, mit dem vorgelochte Kunststoffplatten miteinander verbunden werden. Entsprechend stanzt dieses Element keine Löcher in die Kunststoffplatten. Aufgrund der einander axial gegenüberliegenden Sackbohrungen in den Endbereichen des Verbindungselements können diese Endbereiche radial auswärts umgeformt werden, um die beiden Bauteile miteinander zu verbinden.

DE 10 2016 216 537 A1 beschreibt ein H-förmiges Prägeelement zum Verbinden von zwei Bauteilen mittels Prägeelementschweißen. Das Prägeelement hat die Form eines Hohlzylinders mit einem scheibenförmigen oder stegartigen Mittelteil. Die inneren hohlzylindrischen Bereiche laufen axial auswärts kegelstumpfartig auseinander. Entsprechend bilden die axialen Endbereiche eine ringförmige Endfläche, die über eine Fase mit der inneren Mantelfläche des hohlzylindrischen Bereichs verbunden ist. Diese Geometrie des Prägeelements unterstützt einerseits ein Setzen in ein Bauteil ähnlich einem Halbhohlstanzniet. Dabei bildet sich ein Schließkopf aus. Andererseits ist der andere hohlzylindrische Bereich angepasst, um radial aufgeweitet zu werden und Material zum Ausformen eines Schweißbuckels bereitzustellen.

JP 2006-017 207 A beschreibt einen H-förmigen Halbhohlstanzniet. Anstelle eines Kopfes weist dieser Halbhohlstanzniet einen hohlzylindrischen oberen Schaftbereich auf. Dieser wird durch einen Stempel während des Setzvorgangs radial aufgeweitet, um einen Setzkopf zu bilden. Am gegenüberliegenden axialen Ende bildet die Schneide des Halbhohlstanzniets einen Schließkopf aus, ohne die Bauteile zu durchdringen. Im Gegensatz zu einem Vollstanzniet hält der Halbhohlstanzniet die zwei Bauteile zwischen dem Schließkopf und einem geformten Setzkopf, ohne einen Stanzbutzen zu erzeugen.

GB 687, 574 beschreibt die Verbindung zweier vorgelochter Bauteile mit einem H-förmigen Verbindungselement aus Aluminium. Die Länge des Verbindungselements ist an die Dicke der Bauteile angepasst. Entsprechend ragen die Enden über die Bauteile hinaus, um radial auswärts umgebogen werden zu können. Aufgrund seiner Materialwahl fehlt dem Verbindungselement die Stabilität, um ähnlich einem Vollstanzniet in die Bauteile gestanzt zu werden.

In DE 10 2004 037 471 B3 ist eine Stanznietverbindung von mindestens zwei plattenartigen Bauteilen unter Verwendung eines Stanzniets mit im Wesentlichen rohrförmigen Enden beschrieben. Die Enden des Stanzniets weisen eine Außenseite auf, die sich durchgehend achsparallel zu einer Längsachse erstreckt und an den äußeren Enden mit Schneidkanten versehen ist, wobei die Schneidkanten durch eine Außenseite und eine konische Innenseite des Nietschafts gebildet sind. Der Stanzniet dringt mit der ersten Schneidkante von unten in ein oberes Bauteil und mit der zweiten Schneidkante von oben in ein unteres Bauteil derart ein, dass die Bauteile nicht durchdrungen werden und beide Schneidkanten radial konisch aufgeweitet sind. Durch die Aufweitung sind das obere Bauteil und das untere Bauteil formschlüssig miteinander vernietet. Zur Begrenzung der Eindringtiefe des Stanzniets in die Bauteile ist eine Radialwand anordenbar. Diese verleiht dem Stanzniet betrachtet im Querschnitt eine H-Form.

Bezugnehmend auf die Vielzahl der oben diskutierten vollstanzähnlichen Fügeelemente des Standes der Technik ist es eine Aufgabe vorliegender Erfindung, eine alternative Geometrie eines Fügeelements bereitzustellen, welche universell beim Verbinden von mindestens zwei Bauteilen variierender Bauteildicke verwendbar ist.

### 3. Zusammenfassung der Erfindung

Obige Aufgabe wird durch einen Vollstanzniet gemäß dem unabhängigen Patentanspruch 1 gelöst. Des Weiteren löst eine Stanznietverbindung zwischen mindestens einem ersten und einem zweiten Bauteil mit diesem Vollstanzniet obige Aufgabe. Zum Herstellen oben beschriebener Stanznietverbindung beschreibt vorliegende Erfindung ein Verbindungsverfahren mithilfe des Stanzniets gemäß dem unabhängigen Patentanspruch 11. Vorteilhafte Ausgestaltungen und Weiterentwicklungen vorliegender Erfindung gehen aus der vorliegenden Beschreibung, den begleitenden Zeichnungen sowie den anhängenden Patentansprüchen hervor.

Die vorliegende Erfindung umfasst einen Vollstanzniet, mit dem mindestens zwei Bauteile durch einen Setzvorgang in die mindestens zwei Bauteile miteinander verbindbar sind. Dieser Vollstanzniet weist einen vollzylindrischen Schaft mit spiegelsymmetrisch zueinander ausgestalteten axialen Endbereichen auf, wobei jeder Endbereich eine ebene axialsymmetrische Vertiefung umfasst, die von einer geschlossen umlaufenden Ringwulst umgeben ist, welche kreisbogenförmig die Vertiefung mit einer äußeren Mantelfläche des Schafts verbindet.

Der oben zusammengefasste Vollstanzniet zeichnet sich durch eine Axialsymmetrie aus. Das bedeutet, dass der Vollstanzniet bevorzugt rotationssymmetrisch um seine Längsachse ausgebildet ist. Zudem sind die axialen Endbereiche spiegelsymmetrisch zueinander gestaltet. Auf dieser geometrischen Grundlage kann der Vollstanzniet bidirektional in mehrere Bauteile gesetzt werden. Daher ist es nicht erforderlich, während der Zufuhr des Vollstanzniets zu einem Setzgerät diesen in einer Vorzugsrichtung zu orientieren.

Im Vergleich zu einem bekannten Schneidbereich eines Halbhohlstanzniets, der eine Schneidkante in Kombination mit einer inneren Phase aufweist, sind die beiden einander gegenüberliegend angeordneten axialen Endbereiche durch eine axialsymmetrische Vertiefung in Kombination mit einer umlaufenden Ringwulst charakterisiert. Diese bevorzugte Ringwulst ist ähnlich geformt wie ein Torus, der durch einen Radialschnitt in zwei Hälften geteilt worden ist. Die beiden Hälften des Torus bilden entsprechend bevorzugt die Ringwulst der beiden einander gegenüberliegend angeordneten Endbereiche des erfindungsgemäß bevorzugten Vollstanzniets. Die bevorzugte bogenförmige Gestalt der Ringwulst in den axialen Endbereichen des Vollstanzniets ermöglicht ein Fließen des verdrängten Bauteilmaterials während des Setzvorgangs des Vollstanzniets. Auf diese Weise werden mechanische Spannungsspitzen reduziert und bevorzugt Materialschädigungen in den Bauteilen und/oder im Vollstanzniet vermieden.

Zudem stellt die axialsymmetrisch angeordnete Vertiefung eine bevorzugte Anlagefläche für den aus den mindestens zwei Bauteilen ausgestanzten Butzen dar. Auf diese Weise wird eine vereinfachte Abfuhr des Stanzbutzens aus dem Fügebereich ermöglicht.

Gemäß einer bevorzugten Ausführungsform vorliegender Erfindung definieren ein axialer Abstand zwischen jeweils einem Scheitelpunkt der Ringwulst der axialen Endbereiche eine Nietlänge L1 und ein axialer Abstand zwischen den axialsymmetrischen Vertiefungen eine Innenblocklänge L3, sodass eine Nietfußlänge L2 als die Hälfte einer Differenz aus der Nietlänge L1 und der Innenblocklänge L3 in einem Bereich von 0,2 mm ≤ L2 ≤ 2 mm, vorzugsweise 0,5 mm ≤ L2 ≤ 1,5 mm, liegt.

Der erfindungsgemäß bevorzugte Vollstanzniet stellt eine Verbindung zwischen mindestens zwei Bauteilen dadurch her, dass er zunächst durch die mindestens zwei Bauteile gestanzt wird. Dann werden die axialen Endbereiche radial auswärts umgeformt. Auf diese Weise sind die mindestens zwei Bauteile zwischen zwei gegenüberliegend angeordneten radialen Hinterschnitten gehalten.

Um einen ausreichenden und verlässlichen Halt dieser radialen Hinterschnitte zu gewährleisten, wird die erfindungsgemäß bevorzugte Nietfußlänge L2 in einem bestimmten Längenbereich eingestellt. Denn die Nietfußlänge L2 bildet die Grundlage für ein radiales Aufweiten des axialen Endbereichs des Vollstanzniets. Selbst wenn somit erfindungsgemäß bevorzugt die Länge des Vollstanzniets an unterschiedliche Blechdicken angepasst werden kann, gewährleistet eine Mindestlänge der Nietfußlänge L2 die verlässliche Befestigung der mindestens zwei Bauteile aneinander. In diesem Zusammenhang ist es bevorzugt, die bevorzugte Nietfußlänge L2 trotz unterschiedlicher Längen des erfindungsgemäß bevorzugten Vollstanzniets in dem oben genannten Längenbereich einzustellen.

Gemäß einer weiteren bevorzugten Ausführungsform vorliegender Erfindung liegt die Nietlänge L1 im Bereich von 2 mm ≤ L1 ≤ 9 mm. Zudem ist es bevorzugt, dass die Innenblocklänge L3 im Bereich von 1 mm ≤ L3 ≤ 8 mm liegt.

Die oben beschriebenen bevorzugten Längenbereiche für die Nietlänge L1 und die Innenblocklänge L3 gewährleisten die Anwendbarkeit des erfindungsgemäß bevorzugten Vollstanzniets für unterschiedliche Blechdicken der miteinander zu verbindenden Bauteile. Diese bevorzugte Einstellmöglichkeit der Länge des Vollstanzniets bildet die praktische Grundlage dafür, dass der erfindungsgemäß bevorzugte Vollstanzniet universell für unterschiedliche Fügeaufgaben, d. h. unterschiedlich dicke Bauteile, anwendbar ist. Daher ist es nicht erforderlich, abgesehen von der Nietlänge L1 und der bevorzugten Innenblocklänge L3 die Geometrie des erfindungsgemäß bevorzugten Vollstanzniets zu ändern, um diesen an unterschiedliche Fügeaufgaben anzupassen.

Gemäß einer weiteren bevorzugten Ausgestaltung vorliegender Erfindung weist der Schaft des Vollstanzniets einen Außendurchmesser D1 im Bereich von 4 mm ≤ D1 ≤ 7 mm, vorzugsweise von 5 mm ≤ D1 ≤ 6 mm, auf.

Der oben beschriebene bevorzugte Außendurchmesser des Vollstanzniets hat sich als vorteilhaft erwiesen, um dem Vollstanzniet während des Setzvorgangs in die mindestens zwei Bauteile eine ausreichende Stabilität zu verleihen. Diese Stabilität bildet die Grundlage dafür, dass der Vollstanzniet einen Stanzbutzen aus den mindestens zwei Bauteilen stanzt, ohne durch die auftretende mechanische Belastung ungünstig verformt zu werden. Somit stellt der oben genannte bevorzugte Außendurchmesser des Vollstanzniets einen Kompromiss zwischen ausreichender Stabilität des Fügeelements und begrenztem Platzbedarf für die herzustellende Fügeverbindung dar.

Gemäß einer weiteren bevorzugten Ausgestaltung des erfindungsgemäßen Vollstanzniets definiert dessen Ringwulst in den axialen Endbereichen jeweils einen Nietfuß, der eine radiale Breite B1 gemessen von der äußeren Mantelfläche des Schafts im Bereich von 0,4 mm ≤ B1 ≤ 2,2 mm, vorzugsweise 0,5 mm ≤ B1 ≤ 1,8 mm, aufweist.

Wie oben bereits erwähnt worden ist, ist die bevorzugte Ringwulst der symmetrisch ausgebildeten axialen Endbereiche des Vollstanzniets ähnlich einem Torus geformt. Ein Torus oder Rotationstorus ist eine Rotationsfläche, die durch Rotation eines Kreises um eine in der Kreisebene liegende und den Kreis nicht schneidende Rotationsachse erzeugt wird. Bezogen auf den erfindungsgemäß bevorzugten Vollstanzniet ist die ringförmige Wulst in den axialen Endbereichen ähnlich einem Rotationstorus geschnitten entlang einer Radialebene ausgebildet. Die oben genannte Rotationsachse ist in diesem Fall parallel zur Längsachse des erfindungsgemäß bevorzugten Vollstanzniets angeordnet. Zudem bilden die nach dem Radialschnitt vorliegenden Hälften des Rotationstorus jeweils die Ringwulst in den axialen Endbereichen des erfindungsgemäß bevorzugten Vollstanzniets.

Um eine bevorzugte und vorteilhafte Materialverdrängung während des Fügevorgangs zu erzielen, weist die Ringwulst die oben genannte radiale Breite B1 auf. Somit ist der axiale Endbereich des Vollstanzniets bogenförmig gestaltet und weist keine Schneidkante im Sinne der Geometrie bekannter Halbhohlstanzniete auf. In Bezug auf den genannten Bereich für die Breite B1 des Nietfußes ist diese vorzugsweise unterschiedlich einstellbar, um den Nietfuß an das Eindringen in unterschiedliche Bauteilmaterialien anzupassen.

Gemäß einer weiteren bevorzugten Ausführungsform des erfindungsgemäßen Vollstanzniets ist der Nietfuß radial einwärts über einen Übergangsbereich B2 mit der axialsymmetrischen Vertiefung verbunden, der eine Breite aus dem Bereich von 0,2 mm ≤ B2 ≤ 1,5 mm, vorzugsweise 0,4 mm ≤ B2 ≤ 1,2 mm, aufweist.

In Ergänzung zu der oben diskutierten bevorzugten Breite des Nietfußes schließt sich an diese radial einwärts der bevorzugte Übergangsbereich zur axialsymmetrischen Vertiefung der axialen Endbereiche an. Entsprechend wird mithilfe dieses Übergangsbereichs bevorzugt der Nietfuß radial einwärts weiter verbreitert. Dies unterstützt den Materialfluss beim Setzen des Vollstanzniets in die mindestens zwei Bauteile, wobei vorzugsweise der Nietfuß und der Übergangsbereich stetig ausgebildet sind. Diese stetige Ausbildung der dem Bauteil zugewandten Nietfußgeometrie vermeidet mechanische Spannungsspitzen während des Fügevorgangs.

Gemäß einer weiteren bevorzugten Ausführungsform des erfindungsgemäßen Vollstanzniets ist dessen Ringwulst betrachtet in einem Axialschnitt durch mindestens ein erstes und ein zweites Kreisbogensegment mit einem ersten Radius R1 und einem zweiten Radius R2 aus den Bereichen 0,1 mm ≤ R1 ≤ 0,8 mm, bevorzugt 0,1 mm ≤ R1 ≤ 0,5 mm, und 0,4 mm ≤ R2 ≤ 2,3 mm, bevorzugt 0,5 mm ≤ R2 ≤ 2 mm, definiert.

Bezugnehmend auf die bereits oben angesprochene stetige Ausbildung der Nietfußgeometrie mit dem bevorzugten Übergangsbereich zur axialsymmetrischen Vertiefung wird diese durch Kreisbogensegmente gebildet. Gemäß einer bevorzugten Ausgestaltung werden mindestens zwei Kreisbogensegmente derart miteinander verbunden, dass sie die angesprochene Ringwulst im axialen Endbereich des Vollstanzniets bilden. Die dafür vorzugsweise eingesetzten Radienbereiche für diese Kreisbogensegmente werden in Abhängigkeit von den oben angegebenen Längenbereichen passend eingestellt.

Gemäß einer weiteren bevorzugten Ausführungsform des erfindungsgemäßen Vollstanzniets ist die Ringwulst durch ein drittes Kreisbogensegment mit einem dritten Radius R3 aus dem Bereich von 0,3 mm ≤ R3 ≤ 2,5 mm, vorzugsweise 0,5 mm ≤ R3 ≤ 2,2 mm, definiert, welches die Ringwulst jeweils mit der axialsymmetrischen Vertiefung verbindet.

Vorliegende Erfindung umfasst zudem eine Stanznietverbindung zwischen mindestens einem ersten und einem zweiten Bauteil mit dem erfindungsgemäß bevorzugten Vollstanzniet, wie er oben gemäß unterschiedlicher bevorzugter Ausführungsformen beschrieben worden ist. In dieser erfindungsgemäßen Stanznietverbindung ist jeweils die Ringwulst der axialen Endbereiche radial auswärts aufgeweitet, sodass das erste und das zweite Bauteil zwischen zwei einander gegenüberliegend angeordneten radialen Hinterschnitten der verformten axialen Endbereiche des Vollstanzniets gehalten werden.

Vorliegende Erfindung offenbart zudem ein Verbindungsverfahren mithilfe des oben beschriebenen erfindungsgemäß bevorzugten Vollstanzniets, welches die folgenden Schritte aufweist: Anordnen von mindestens einem ersten und einem zweiten Bauteil übereinander in einer stapelförmigen Anordnung, Positionieren der stapelförmigen Anordnung auf einer Matrize, Setzen des Vollstanzniets mit einem Stempel in die stapelförmige Anordnung, wobei der Stempel und die Matrize in den axialen Endbereichen des Vollstanzniets jeweils einen radialen Hinterschnitt erzeugen.

Wie bereits aus den obigen Beschreibungen der bevorzugten Ausführungsformen des erfindungsgemäßen Vollstanzniets hervorgeht, erzeugt dieser während des Setzvorgangs in mindestens ein erstes und ein zweites Bauteil einen Stanzbutzen. Entsprechend sind die miteinander zu verbinden Bauteile vorzugsweise nicht vorgelocht, um die Verbindung mit dem oben beschriebenen bevorzugten Vollstanzniet herzustellen. Zudem wird der erfindungsgemäß bevorzugte Vollstanzniet nicht drehend in die mindestens zwei Bauteile gesetzt. Nach diesem Setzvorgang bzw. im Rahmen dieses Setzvorgangs werden die axialen Endbereiche radial aufgeweitet, um die haltenden radialen Hinterschnitte auszubilden.

Weiterhin bevorzugt besteht der erfindungsgemäß bevorzugte Vollstanzniet aus Stahl oder einem ähnlichen stabilen und gleichzeitig in seinen axialen Endbereichen verformbaren Material. Zur Durchführung des Verbindungsverfahrens und für die dadurch erzeugte Verbindung bestehen die mindestens zwei Bauteile bevorzugt aus Kunststoffen, verstärkten Kunststoffen, Materialkombinationen aus dem Leichtbau, Metallen, wie beispielsweise Stahl, hochfester Stahl, Aluminium oder Aluminiumlegierungen sowie Magnesium- und Titanlegierungen.

### 4. Kurzbeschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine axiale Schnittdarstellung einer bevorzugten Ausführungsform des erfindungsgemäßen Vollstanzniets,
- Figuren 2 bis 7: einzelne bevorzugte Stadien des Verbindungsverfahrens von zwei Bauteilen mit dem bevorzugten Vollstanzniet und

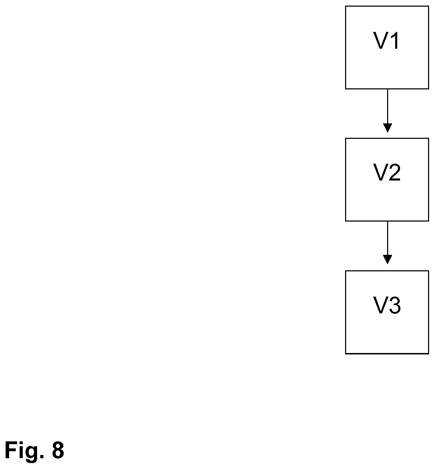

- Figur 8: ein Flussdiagramm einer bevorzugten Ausführungsform des Verbindungsverfahrens mit dem bevorzugten Vollstanzniet.

### 5. Detaillierte Beschreibung der bevorzugten Ausführungsformen

Eine bevorzugte Ausführungsform des erfindungsgemäßen Vollstanzniets 1 ist in einem Querschnitt entlang einer Längsachse 1 dargestellt. Der Vollstanzniet 1 umfasst einen vollzylindrischen Schaft 10. Dieser wird durch zwei einander gegenüberliegend angeordnete axiale Endbereiche 20, 30 begrenzt.

Die Endbereiche 20, 30 sind spiegelsymmetrisch zu einer mittleren Querachse ausgebildet, die quer zur Längsachse 1 verläuft.

Der vollzylindrische Schaft 10 weist an seiner radialen Außenseite eine Mantelfläche 12 auf. Die Mantelfläche 12 verläuft bevorzugt parallel zur Längsachse 1.

Die axialen Endbereiche 20, 30 weisen eine ebene axialsymmetrische Vertiefung 22, 32 auf. Die Vertiefung 22, 32 ist rotationssymmetrisch zur Längsachse 1 angeordnet. Sie bildet jeweils den tiefsten Punkt der axialen Endbereiche 20, 30 in Bezug auf die Längsachse 1.

Die Vertiefung 20; 30 ist von einer geschlossenen umlaufenden Ringwulst 40; 50 umgeben. Die Ringwulst 40; 50 ist vorzugsweise ähnlich einem Torus geformt, der über einen Radialschnitt in zwei gleich große Hälften unterteilt worden ist. Eine Hälfte davon bildet die Ringwulst 40 und die andere Hälfte die Ringwulst 50.

Die Ringwulst 40; 50 ragt in axialer Richtung über die Vertiefung 22; 32 hinaus und bildet eine Nietfußgeometrie bzw. einen endseitigen Nietfuß des Vollstanzniets 1.

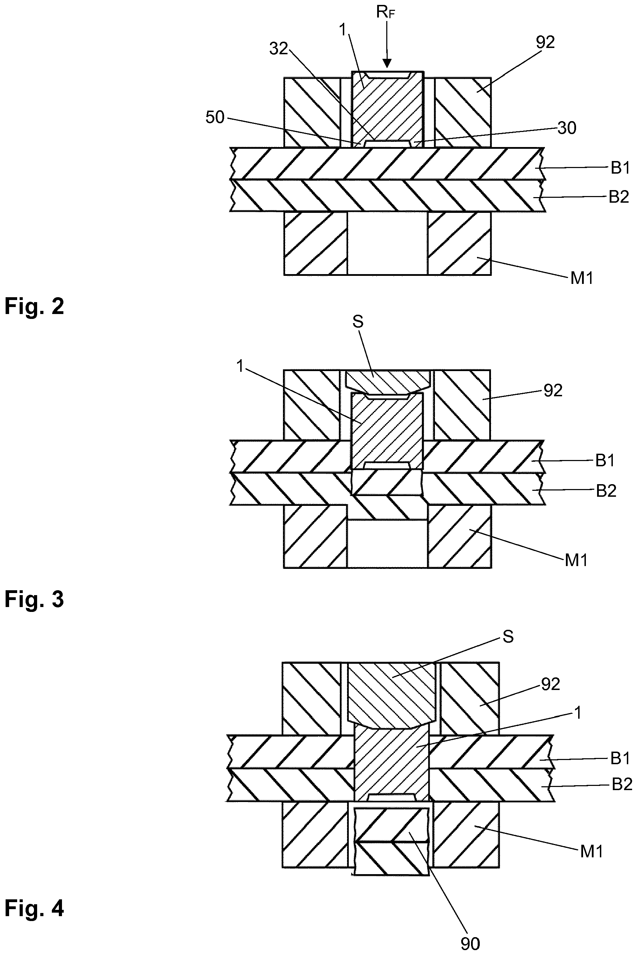

Werden mindestens zwei nicht vorgelochte Bauteile B1, B2 in einer stapelförmigen Anordnung auf einer Matrize M1 angeordnet (Schritt V1, V2), kontaktiert in einem beginnenden Fügeverfahren zunächst der Nietfuß 40; 50 das obere Bauteil B1 (siehe Figur 2). Ein Stempel S übt in Fügerichtung R_{F} eine Fügekraft auf den Vollstanzniet 1 aus. Dadurch stanzt der Vollstanzniet 1 mit der Nietfußgeometrie 40; 50 voraus während des Setzens (Schritt V3) einen Stanzbutzen 90 aus den mindestens zwei Bauteilen B1, B2. Während des Setzvorgangs wird das Material des an die Nietfußgeometrie 50 angrenzenden Bauteils B1 zumindest teilweise verdrängt. Es fließt bevorzugt entlang der kreisbogenförmigen Verbindung zwischen der Vertiefung 32 und der äußeren Mantelfläche 12, die durch die Ringwulst 50 gebildet wird.

Um den Stapel aus Bauteilen B1, B2 sicher auf der Matrize M1 zu halten, wird vorzugsweise ein Niederhalter 92 verwendet.

Der während des Stanzens entstehende Stanzbutzen 90 wird ebenfalls bevorzugt durch einen Kanal in der Matrize M1 abgeführt.

Der Vollstanzniet 1 ist vorzugsweise für das Verbinden von Bauteilen B1, B2 unterschiedlicher Dicke geeignet. In diesem Zusammenhang ist es erforderlich, dass der Vollstanzniet 1 zumindest mit einem Teil der Endbereiche 20, 30 über die übereinander angeordneten Bauteile B1, B2 hinaus ragt. Das bildet die bevorzugte Grundlage, um die Ringwulst 40; 50 während des Verbindungsverfahrens radial auswärts umzuformen. Die radial auswärts umgeformten Ringwulste 40, 50 bilden dann jeweils endseitig am Vollstanzniet 1 einen radialen Hinterschnitt, um die Bauteile B1, B2 dazwischen zu halten.

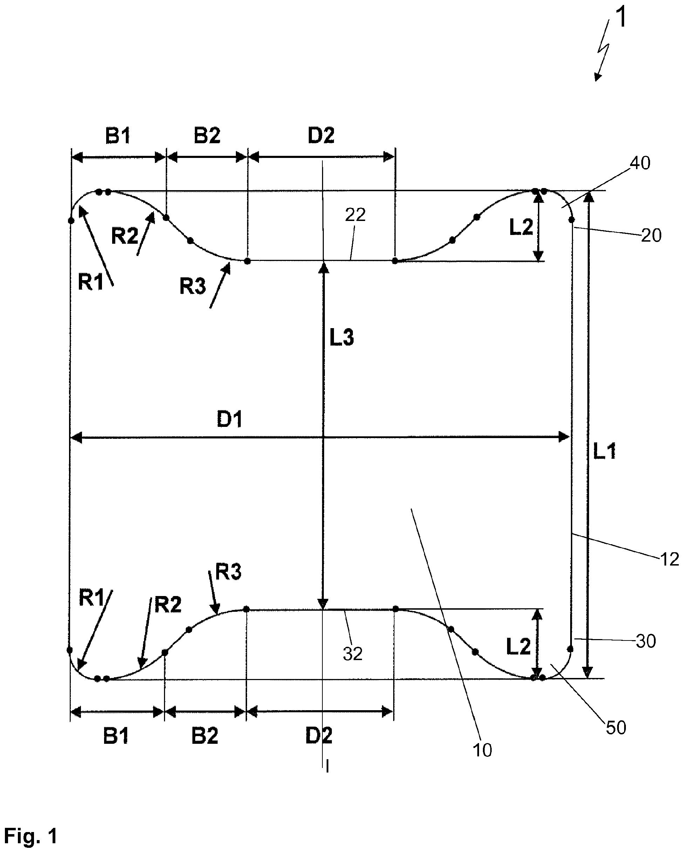

Vorzugsweise umfasst der Vollstanzniet 1 eine Nietlänge L1 (siehe Figur 1), die als axialer Abstand zwischen den Scheitelpunkten der Ringwulste 40, 50 definiert ist. Die Nietlänge L1 liegt im Bereich von 2 mm ≤ L1 ≤ 9 mm. Ein axialer Abstand zwischen den Vertiefungen 22, 32 definiert eine Innenblocklänge L3. Diese ist vorzugsweise im Bereich von 1 mm ≤ L3 ≤ 8 mm definiert.

Aus der Nietlänge L1 und der Innenblocklänge L3 ergibt sich die Nietfußlänge L2. Die Nietfußlänge L2 ist als die Hälfte der Differenz aus Nietlänge L1 und Innenblocklänge L3 definiert. Die Nietfußlänge L2 hat vorzugsweise eine Größe aus dem Bereich von 0,2 mm ≤ L2 ≤ 2 mm, vorzugsweise 0,5 mm ≤ L2 ≤ 1,5 mm und weiter bevorzugt von 0,5 mm ≤ L2 ≤ 1 mm oder L2 = 0,7 mm.

Die Ringwulst 40; 50 der axialen Endbereiche 20; 30 umfasst eine kreisbogenförmig stetig verlaufende Fläche. Diese Fläche verbindet die äußere Mantelfläche 12 mit der ebenen Vertiefung 22; 32. Durch den stetigen Verlauf der kreisbogenförmigen Fläche wird vorzugsweise die Verformung der Bauteile B1, B2 während des Setzens unterstützt. Denn die kreisbogenförmige Fläche des axialen Endbereichs 20; 30, die die Stempelkraft auf die Bauteile B1, B2 überträgt, reduziert mechanische Spannungsspitzen im Fügebereich im Vergleich zu einer Schneidkante eines Halbhohlstanzniets. Weiterhin bevorzugt setzt sich die kreisbogenförmige Fläche der Ringwulst 40; 50 betrachtet im Axialschnitt des Vollstanzniets 1 aus zwei Kreisbogensegmenten der Radien R1 und R2 zusammen. Diese Radien haben eine bevorzugte Größe aus folgenden Bereichen: 0,1 mm ≤ R1 ≤ 0,8 mm, vorzugsweise 0,1 mm ≤ R1 ≤ 0,5 mm und insbesondere von R1 = 0,3 mm sowie 0,4 mm ≤ R2 ≤ 2,3 mm, bevorzugt 0,5 mm ≤ R2 ≤ 2 mm und weiter bevorzugt von 1 mm ≤ R2 ≤ 1,6 mm.

Gemäß einer weiteren bevorzugten Ausgestaltung des Vollstanzniets 1 besteht der kreisbogenförmige Oberflächenabschnitt der Ringwulst 40; 50 aus drei Kreisbogensegmenten der Radien R1, R2 und R3 betrachtet im Querschnitt der Fig. 1. Die bevorzugte Kombination dieser Kreisbogensegmente verbindet die äußere Mantelfläche 12 stetig mit der Vertiefung 22; 32.

Vorzugsweise ist das dritte Kreisbogensegment mit dem Radius R3 angrenzend an die Vertiefung 22; 32 angeordnet. Der Radius R3 hat bevorzugt eine Größe aus dem Bereich 0,3 mm ≤ R3 ≤ 2,5 mm, insbesondere 0,5 mm ≤ R3 ≤ 2,2 mm und weiter bevorzugt 0,5 mm ≤ R3 ≤ 2 mm sowie 0,1 mm ≤ R3 ≤ 1 mm. Neben der bevorzugten Formgestaltung der Ringwulst 40, 50 in den axialen Endbereichen 20, 30 des Vollstanzniets 1 bildet die Ringwulst 40, 50 in Kombination mit der Vertiefung 22, 32 die Nietfußgeometrie (siehe oben). Diese Nietfußgeometrie überträgt die Setzkraft des Stempels S auf die Fügeteile B1, B2, um diese zu stanzen. In Abhängigkeit von den Materialien der zu stanzenden Bauteile B1, B2 ist vorzugsweise die Nietfußbreite B1 aus dem Bereich von 0,4 mm ≤ B1 ≤ 2,2 mm, vorzugsweise 0,5 mm ≤ B1 ≤ 1,8 mm, weiter bevorzugt 0,5 mm ≤ B1 ≤ 1,5 mm und insbesondere B1 = 1 mm.

Ebenfalls bevorzugt wird der Nietfuß mit der Nietfußbreite B1 über den Übergangsbereich B2 vergrößert und mit der Vertiefung 22, 32 verbunden. Der Übergangsbereich B2 hat in dieser bevorzugten Ausführungsform eine Breite aus dem Bereich von 0,2 mm ≤ B2 ≤ 1,5 mm, bevorzugt 0,4 mm ≤ B2 ≤ 1,2 mm und weiter bevorzugt von 0,15 mm ≤ B2 ≤ 0,87 mm.

Damit die Setzkraft des Stempels S verlässlich über den Vollstanzniet 1 auf die Bauteile B1, B2 übertragbar ist, hat der Vollstanzniet 1 einen bevorzugten Außendurchmesser D1 aus dem Bereich von 4 mm ≤ D1 ≤ 7 mm, vorzugsweise 5 mm ≤ D1 ≤ 6 mm und insbesondere von D1 = 5,3 mm.

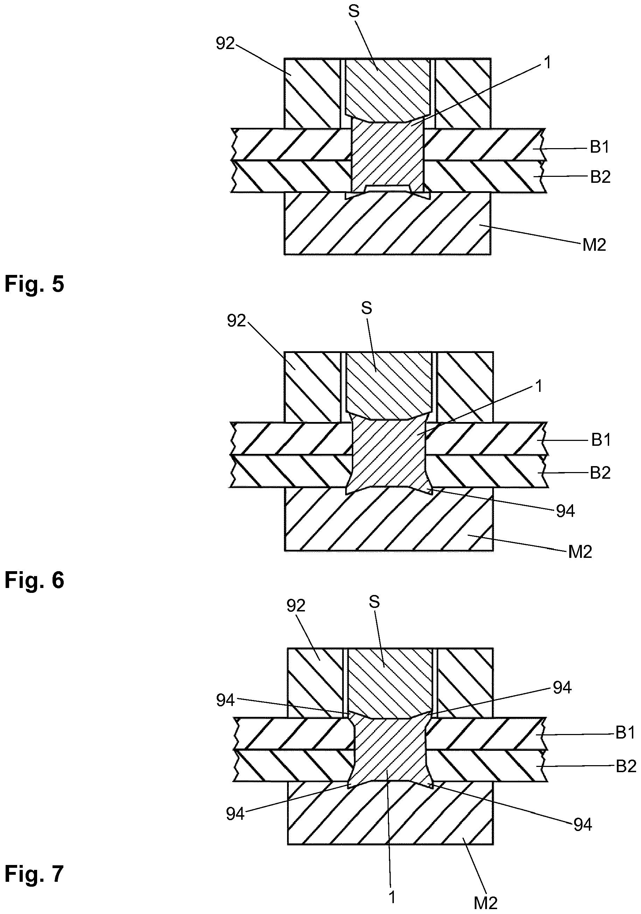

Gemäß einer weiteren bevorzugten Ausführungsform vorliegender Erfindung wird ein profilierter Stempel S zum Setzen des Vollstanzniets 1 verwendet. Dieser hat anstelle einer ebenen Stempelfläche bevorzugt eine konvex geformte Stempelfläche (siehe Figuren 5 bis 7). Die konvexe Form der Stempelfläche ist vorzugsweise an die flächige Ausdehnung der ebenen Vertiefung 22, 32 angepasst, d.h. sie ist komplementär dazu ausgebildet.

Die Vertiefung 22, 32 hat vorzugsweise einen Innenblockdurchmesser D2 aus dem Bereich von 0,8 mm ≤ D2 ≤ 3 mm, vorzugsweise 1 mm ≤ D2 ≤ 2,5 mm und weiter bevorzugt von 1,57 mm ≤ D2 ≤ 2,4 mm.

Während des Setzens des Vollstanzniets 1 (Schritt V3) werden somit die mindestens zwei Bauteile B1, B2 durchstanzt. Nachfolgend wird der Stanzbutzen 90 durch den Kanal der Matrize M1 abgeführt.

Zum bevorzugten Ausformen bzw. Erzeugen der radialen Hinterschnitte 94 wird der Vollstanzniet 1 zwischen dem Stempel S und einer kanalfreien Matrize M2 komprimiert. Dabei verformt sich zumindest ein Teil der Nietfußgeometrie, also der Ringwulst 40, 50, radial auswärts und bildet die radialen Hinterschnitte 94 an den mindestens zwei Bauteilen B1, B2.

### Bezugszeichenliste

- 1: Vollstanzniet
- 10: vollzylindrischer schafft
- 12: Mantelfläche
- 20, 30: axiale Endbereiche
- 22, 32: Vertiefung
- 40,50: Ringwulst
- 90: Stanzbutzen
- 92: Niederhalter
- 94: radialer Hinterschnitt
- 1: Längsachse
- M1: Matrize mit Kanal
- M2: Matrize ohne Kanal
- B1, B2: Bauteile
- S: Stempel
- R_{F}: Fügerichtung

## Patentansprüche

1. Ein Vollstanzniet (1), mit dem mindestens zwei Bauteile (B1, B2) durch einen Setzvorgang in die mindestens zwei Bauteile (B1, B2) miteinander verbindbar sind, der einen vollzylindrischen Schaft (10) mit spiegelsymmetrisch zueinander ausgestalteten axialen Endbereichen (20, 30) umfasst, wobei jeder Endbereich (20, 30) eine ebene axialsymmetrische Vertiefung (22, 32) aufweist, die von einer geschlossen umlaufenden Ringwulst (40, 50) umgeben ist, welche kreisbogenförmig die Vertiefung (22, 32) mit einer äußeren Mantelfläche (12) des Schafts (10) verbindet.

2. Vollstanzniet (1) gemäß Patentanspruch 1, in dem ein axialer Abstand zwischen jeweils einem Scheitelpunkt der Ringwulst (40; 50) der axialen Endbereiche (20, 30) eine Nietlänge L1 und ein axialer Abstand zwischen den axialsymmetrischen Vertiefungen (22, 32) eine Innenblocklänge L3 definieren, sodass eine Nietfußlänge L2 als die Hälfte einer Differenz aus der Nietlänge L1 und der Innenblocklänge L3 in einem Bereich von 0,2 mm ≤ L2 ≤ 2 mm, vorzugsweise 0,5 mm ≤ L2 ≤ 1,5 mm, liegt.

3. Vollstanzniet (1) gemäß Patentanspruch 2, dessen Nietlänge L1 im Bereich von 2 mm ≤ L1 ≤ 9 mm liegt.

4. Vollstanzniet (1) gemäß Patentanspruch 2 oder 3, dessen Innenblocklänge L3 im Bereich von 1 mm ≤ L3 ≤ 8 mm liegt.

5. Vollstanzniet (1) gemäß einem der vorhergehenden Patentansprüche, dessen Schaft (10) einen Außendurchmesser D1 im Bereich von 4 mm ≤ D1 ≤ 7 mm, vorzugsweise 5 mm ≤ D1 ≤ 6 mm, aufweist.

6. Vollstanzniet (1) gemäß einem der vorhergehenden Patentansprüche, dessen Ringwulst (40, 50) in den axialen Endbereichen (20, 30) jeweils einen Nietfuß definiert, der eine radiale Breite B1 gemessen von der äußeren Mantelfläche (12) des Schafts (10) im Bereich von 0,4 mm ≤ B1 ≤ 2,2 mm, vorzugsweise 0,5 mm ≤ B1 ≤ 1,8 mm, aufweist.

7. Vollstanzniet (1) gemäß Patentanspruch 6, dessen Nietfuß radial einwärts über einen Übergangsbereich B2 mit der axialsymmetrischen Vertiefung (22, 32) verbunden ist, der eine Breite aus dem Bereich von 0,2 mm ≤ B2 ≤ 1,5 mm, vorzugsweise 0,4 mm ≤ B2 ≤ 1,2 mm, aufweist.

8. Vollstanzniet (1) gemäß einem der vorhergehenden Patentansprüche, dessen Ringwulst (40, 50) betrachtet in einem Axialschnitt durch mindestens ein erstes und ein zweites Kreisbogensegment mit einem ersten Radius R1 und einem zweiten Radius R2 aus den Bereichen 0,1 mm ≤ R1 ≤ 0,8 mm, bevorzugt 0,1 mm ≤ R1 ≤ 0,5 mm, und 0,4 mm ≤ R2 ≤ 2,3 mm, bevorzugt 0,5 mm ≤ R2 ≤ 2 mm, definiert ist.

9. Vollstanzniet (1) gemäß Patentanspruch 8, dessen Ringwulst (40, 50) durch ein drittes Kreisbogensegment mit einem dritten Radius R3 aus dem Bereich von 0,3 mm ≤ R3 ≤ 2,5 mm, vorzugsweise 0,5 mm ≤ R3 ≤ 2,2 mm, definiert ist, welches die Ringwulst (40, 50) jeweils mit der axialsymmetrischen Vertiefung (22, 32) verbindet.

10. Eine Stanznietverbindung zwischen mindestens einem ersten (B1) und einem zweiten Bauteil (B2) mit dem Vollstanzniet (1) gemäß einem der vorhergehenden Patentansprüche, dessen Ringwulst (40, 50) der axialen Endbereiche (20, 30) jeweils radial auswärts aufgeweitet ist, so dass das erste (B1) und das zweite Bauteil (B2) zwischen zwei einander gegenüberliegend angeordneten radialen Hinterschnitten (94) der verformten axialen Endbereiche (20, 30) des Vollstanzniets (1) gehalten werden.

11. Ein Verbindungsverfahren mithilfe des Vollstanzniets (1) gemäß einem der vorhergehenden Patentansprüche 1 bis 9, welches die folgenden Schritte aufweist:
a. Anordnen von mindestens einem ersten (B1) und einem zweiten Bauteil (B2) übereinander in einer stapelförmigen Anordnung (Schritt V1),
b. Positionieren der stapelförmigen Anordnung auf einer Matrize (M1) (Schritt V2),
c. Setzen des Vollstanzniets (1) mit einem Stempel (S) in die stapelförmige Anordnung, wobei
d. der Stempel (90) und die Matrize (M1) in den axialen Endbereichen (20, 30) des Vollstanzniets (1) jeweils einen radialen Hinterschnitt (94) erzeugen.

## Claims

1. A solid punch rivet (1) with which at least two components (B1, B2) are connectable with each other by means of a setting process into the at least two components (B1, B2), the solid punch rivet (1) comprising a solid cylindrical shaft (10) with axial end portions (20, 30) that are designed mirror-symmetrically to one another, with each end portion (20, 30) having a plane axially symmetrical recess (22, 32) encompassed by a closed circumferential ring bead (40, 50) which connects the recess (22, 32) with an outer lateral area (12) of the shaft (10) in a circular arc shaped manner.

2. Solid punch rivet (1) according to claim 1 in which an axial distance between each of a vertex of the ring bead (40; 50) of the axial end portions (20, 30) define a rivet length L1 and an axial distance between the axially symmetrical recesses (22, 32) defines an inner block length L3, so that a rivet foot length L2, being half of a difference of the rivet length L1 and the inner block length L3, lies within a range from 0.2 mm ≤ L2 ≤ 2 mm, preferably 0.5 mm ≤ L2 ≤ 1.5 mm.

3. Solid punch rivet (1) according to claim 2, the rivet length L1 of which lies within the range from 2 mm ≤ L1 ≤ 9 mm.

4. Solid punch rivet (1) according to claim 2 or 3, the inner block length L3 of which lies within a range from 1 mm ≤ L3 ≤ 8 mm.

5. Solid punch rivet (1) according to one of the preceding claims, the shaft (10) of which has an outer diameter D1 within the range from 4 mm ≤ D1 ≤ 7mm, preferably 5 mm ≤ D1 ≤ 6 mm.

6. Solid punch rivet (1) according to one of the preceding claims, whose ring bead (40, 50) in the axial end portions (20, 30) each defines a rivet foot, the rivet foot having a radial width B1 measured from the outer lateral area (12) of the shaft (10) in the range from 0.4 mm ≤ B1 ≤ 2.2 mm, preferably 0.5 mm ≤ B1 ≤ 1.8 mm.

7. Solid punch rivet (1) according to claim 6, the rivet foot of which is radially inwardly connected with the axially symmetrical recess (22, 32) over a transition portion B2 having a width in the range from 0.2 mm ≤ B2 ≤ 1.5 mm, preferably 0.4 mm ≤ B2 ≤ 1.2 mm.

8. Solid punch rivet (1) according to one of the preceding claims, the ring bead (40, 50) of which, seen in an axial cut, being defined by at least a first and a second circular arc segment with a first radius R1 and a second radius R2 from the ranges 0.1 mm ≤ R1 ≤ 0.8 mm, preferably 0.1 mm ≤ R1 ≤ 0.5 mm, and 0.4 mm ≤ R2 ≤ 2.3 mm, preferably 0.5 mm ≤ R2 ≤ 2 mm.

9. Solid punch rivet (1) according to claim 8, the ring bead (40, 50) of which being defined by a third circular arc segment with a third radius R3 of the range from 0.3 mm ≤ R3 ≤ 2.5 mm, preferably 0.5 mm ≤ R3 ≤ 2.2 mm, which connects the ring bead (40, 50) each with the axially symmetrical recess (22, 32).

10. A punch rivet connection between at least a first (B1) and a second component (B2) with the solid punch rivet (1) according to one of the preceding claims, wherein the ring bead (40, 50) of the axial end portions (20, 30) of the solid punch rivet (1) are each radially expanded to the outside so that the first (B1) and the second component (B2) are retained between two radial undercuts (94) arranged opposite to one another, of the deformed axial end portions (20, 30) of the solid punch rivet (1).

11. A connecting method with the help of the solid punch rivet (1) according to one of the preceding claims 1 to 9, having the following steps:
a. arranging of at least a first (B1) and a second component (B2) upon one another in a stack-like arrangement (step V1),
b. positioning the stack-like arrangement on a die (M1) (step V2),
c. setting the solid punch rivet (1) with a punch (S) into the stack-like arrangement, wherein
d. the punch (90) and the die (M1) generate a radial undercut (94) in each of the axial end portions (20, 30) of the solid punch rivet (1).

## Revendications

1. Rivet auto-perforant (1) permettant de relier entre eux au moins deux composants (B1, B2) à l'aide d'une opération de pose dans les au moins deux composants (B 1, B2), comportant un tige entièrement cylindrique (10) avec des régions d'extrémité axiales (20, 30) conçues symétriquement l'une par rapport à l'autre, dans lequel chaque région d'extrémité (20, 30) présente une cavité plane à symétrie axiale (22, 32), laquelle est entourée par un bourrelet annulaire périphérique fermé (40, 50) reliant la cavité (22, 32) à une surface d'enveloppe extérieure (12) de la tige (10) en forme d'arc de cercle.

2. Rivet auto-perforant (1) selon la revendication 1, dans lequel une distance axiale respectivement entre un sommet du bourrelet annulaire (40 ; 50) des régions d'extrémité axiales (20, 30) définit une longueur de rivet L1 et une distance axiale entre les cavités à symétrie axiale (22, 32) définit une longueur de bloc intérieur L3, de sorte qu'une longueur de pied de rivet L2 correspondant à la moitié d'une différence entre la longueur de rivet L1 et la longueur de bloc intérieur L3 est comprise dans une plage de 0,2 mm ≤ L2 ≤ 2 mm, de préférence de 0,5 mm ≤ L2 ≤ 1,5 mm.

3. Rivet auto-perforant (1) selon la revendication 2, dont la longueur de rivet L1 est comprise dans la plage de 2 mm ≤ L1 ≤ 9 mm.

4. Rivet auto-perforant (1) selon la revendication 2 ou 3, dont la longueur de bloc intérieur L3 est comprise dans la plage de 1 mm ≤ L3 ≤ 8 mm.

5. Rivet auto-perforant (1) selon l'une des revendications précédentes, dont la tige (10) présente un diamètre extérieur D1 compris dans la plage de 4 mm ≤ D1 ≤ 7 mm, de préférence de 5 mm ≤ D1 ≤ 6 mm.

6. Rivet auto-perforant (1) selon l'une des revendications précédentes, dont le bourrelet annulaire (40, 50) définit respectivement un pied de rivet dans les régions d'extrémité axiales (20, 30), lequel présente une largeur radiale B1 mesurée à partir de la surface d'enveloppe extérieure (12) de la tige (10) comprise dans la plage de 0,4 mm ≤ B1 ≤ 2,2 mm, de préférence de 0,5 mm ≤ B1 ≤ 1,8 mm.

7. Rivet auto-perforant (1) selon la revendication 6, dont le pied de rivet est relié à la cavité à symétrie axiale (22, 32) radialement à l'intérieur par le biais d'une région de transition B2, laquelle présente une largeur comprise dans la région de 0,2 mm ≤ B2 ≤ 1,5 mm, de préférence de 0,4 mm ≤ B2 ≤ 1,2 mm.

8. Rivet auto-perforant (1) selon l'une des revendications précédentes, dont le bourrelet annulaire (40, 50) vu dans une coupe axiale est défini par au moins un premier et un deuxième segment d'arc de cercle avec un premier rayon R1 et un deuxième rayon R2 compris dans les plages de 0,1 mm ≤ R1 ≤ 0,8 mm, de préférence de 0,1 mm ≤ R1 ≤ 0,5 mm, et de 0,4 mm ≤ R2 ≤ 2,3 mm, de préférence de 0,5 mm ≤ R2 ≤ 2 mm.

9. Rivet auto-perforant (1) selon la revendication 8, dont le bourrelet annulaire (40, 50) est défini par un troisième segment d'arc de cercle avec un troisième rayon R3 compris dans la plage de 0,3 mm ≤ R3 ≤ 2,5 mm, de préférence de 0,5 mm ≤ R3 ≤ 2,2 mm, lequel relie le bourrelet annulaire (40, 50) respectivement à la cavité à symétrie axiale (22, 32).

10. Assemblage par rivet poinçonnant entre au moins un premier (B1) et un deuxième composant (B2) à l'aide du rivet auto-perforant (1) selon l'une des revendications précédentes, dont le bourrelet annulaire (40, 50) des régions d'extrémité axiales (20, 30) est respectivement élargie radialement vers l'extérieur, de sorte que le premier (B1) et le deuxième composant (B2) sont maintenus entre deux contre-dépouilles radiales (94) opposées l'une à l'autre des régions d'extrémité axiales (20, 30) déformées du rivet auto-perforant (1).

11. Procédé d'assemblage à l'aide du rivet auto-perforant (1) selon l'une des revendications précédentes 1 à 9, lequel présente les étapes suivantes :
a. agencement d'au moins un premier (B1) et un deuxième composant (B2) l'un sur l'autre dans un agencement en forme de pile (Étape V1),
b. positionnement de l'agencement en forme de pile sur une matrice (M1) (Étape V2),
c. pose du rivet auto-perforant (1) avec un tampon (S) dans l'agencement en forme de pile, dans lequel
d. le tampon (90) et la matrice (M1) réalisent respectivement une contre-dépouille radiale (94) dans les régions d'extrémité axiales (20, 30) du rivet auto-perforant (1).
